(19)

Europäisches
Patentamt
European
Patent Office
Office européen
des brevets

(11) **EP 4 415 295 A2**

(12) **EUROPEAN PATENT APPLICATION**

(43) Date of publication:
**14.08.2024 Bulletin 2024/33**

(21) Application number: **24155483.1**

(22) Date of filing: **02.02.2024**

(51) International Patent Classification (IPC):
**H04L 5/00** *(2006.01)* **H04W 64/00** *(2009.01)*
**H04W 72/40** *(2023.01)*

(52) Cooperative Patent Classification (CPC):
**H04L 5/0048; H04L 5/0094; H04W 64/00;
H04W 72/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.02.2023 US 202363443875 P
11.01.2024 US 202418410760**

(71) Applicant: **Samsung Electronics Co., Ltd.
Suwon-si, Gyeonggi-do 16677 (KR)**

(72) Inventors:
• **ZHOU, Yuhan
San Jose, CA, 95134 (US)**
• **FOUAD, Yaser
San Jose, CA, 95134 (US)**
• **SARTORI, Philippe
San Jose, CA, 95134 (US)**

(74) Representative: **Kuhnen & Wacker
Patent- und Rechtsanwaltsbüro PartG mbB
Prinz-Ludwig-Straße 40A
85354 Freising (DE)**

(54) **RESOURCE ALLOCATION FOR POSITIONING REFERENCE SIGNAL**

(57) A method of resource allocation is disclosed, the method comprising: performing (S101), by a user equipment, UE, based on a first configuration, a sensing-based resource selection procedure to obtain a set of candidate single-slot sidelink, SL, positioning reference signal, SL-PRS, resources to be used for transmission, wherein a candidate single-slot SL-PRS resource is uniquely identified by a SL-PRS resource index within a set of SL-PRS resource ID(s) provided by a higher layer and a slot index; passing (S102) the set of candidate single-slot SL-PRS resources to the higher layer for selection; receiving (S103) an indication of selected single-slot SL-PRS resources from the higher layer; transmitting (S104), by the first UE, a SL-PRS signal using selected single-slot SL-PRS resources; and transmitting (S105), by the first UE, in a same slot including the SL-PRS signal, a PSCCH signal carrying a sidelink control information, SCI.

FIG. 3A

EP 4 415 295 A2

**Description**

BACKGROUND

1. Field

The disclosure is directed to resource allocation in a 5G sidelink (SL) system.

2. Description of Related Art

5G SL communications allow user equipments (UEs) to transfer data independently without the assistance of a base station (gBN). This enables V2X communications.

A UE may use a physical sidelink broadcast channel (PSBCH) to transmit a synchronization signal block (SSB). A receiving UE uses the SSB to synchronize its timing and frequency components to those of the transmitting UE. Important use cases are positioning and data transmission. Data transmission is performed using a physical sidelink shared channel (PSSCH).

A UE may transmit a positioning reference signal (PRS). The expressions PRS and SL-PRS are used interchangeably herein.

An overall description of radio access network aspects for 5G V2X is provided in ETSI TR 137.985 V16.0.0, "Overall description of Radio Access Network (RAN) aspects for Vehicle-to-everything (V2X) based on LTE and NR," July, 2020.

Some acronyms used in 5G SL are as follows.

5GC: Fifth Generation core network

AGC: Automatic gain control

BWP: Bandwidth part

CA: Carrier aggregation

CAM: Cooperative awareness message

CBR: Channel busy ratio

CR: Channel usage ratio

DMRS: Demodulation reference signal

EPC: Evolved packet core

MNO: Mobile network operator

PSBCH: Physical sidelink broadcast channel

PSCCH: Physical sidelink control channel

PSSCH: Physical sidelink shared channel

PSSS, S-PSS: Primary sidelink synchronization signal (LTE), sidelink primary synchronization signal (NR)

PT-RS: Phase-tracking reference signal

RSU: Roadside unit

SCI: Sidelink control information

SL-BCH: Sidelink broadcast channel

SLSS: Sidelink synchronization signal

S-RSSI: Sidelink received signal strength indicator

S-SSB: Sidelink synchronization signal block

SSSS, S-SSS: Secondary sidelink synchronization signal (LTE), sidelink secondary synchronization signal (NR)

V2I: Vehicle-to-infrastructure

V2P: Vehicle-to-pedestrian

V2V: Vehicle-to-vehicle

V2X: Vehicle-to-everything

SUMMARY

For SL-PRS in a shared resource pool (includes data transmission), the SL-PRS symbols are not mapped to the PSSCH symbols carrying DMRS. In this configuration, UE multiplexing is allowed and N UEs can transmit SL-PRS at the same time if SL-PRS has comb size of N. Also, when there is CSI-RS and/or PTRS in the slot, a UE configured to transmit SL-PRS can, instead, not transmit SL-PRS in the same slot.

When selecting resources for SL-PRS transmission in a dedicated resource pool (no data transmission), single-slot-Single-SL-PRS-index resource candidates can be considered instead of the single-slot resource candidates used when performing resource selection for a data transmission. A candidate single-slot-Single-SL-PRS-index resource for transmission $R_{x, y, z}$ (indicated with three degrees of freedom, x: frequency, y: time, z: index) is defined as a set of $L_{subCH}$ contiguous sub-channels with sub-channel x+j in slot $t_y^{SL}$ where j = 0,...,$L_{subCH}$ - 1 and SL-PRS index. The value of $L_{subCH}$ can be either obtained from: i) the resource selection assistance request or from resource pool (pre)-configuration in case of resource selection assistance for SL-PRS transmission; or ii) from higher layers that trigger the resource selection for SL-PRS transmission or from resource pool (pre)-configuration.

The UE shall assume that any set of $L_{subCH}$ contiguous sub-channels included in the corresponding resource pool within the time interval $[n + T_1, n + T_2]$ correspond to one candidate single-slot-Single-SL-PRS-index resource, where selection of $T_1$ is up to UE implementation under $0 \leq T_1 \leq T_{proc,1}$, where $T_{proc,1}$ is defined in slots. In case of a shared resource pool or $T_1 = 0$ in case of a dedicated resource pool; If $T_{2min}$ is shorter than the remaining packet delay budget (in slots) then $T_2$ is up to UE implementation subject to $T_{2min} \leq T_2 \leq$ remaining packet budget (in slots); otherwise $T_2$ is set to the remaining packet delay budget (in slots). The total number of candidate single-slot resources is denoted by $M_{total}$.

Provided herein is a method of resource allocation, the method including performing, by a first user equipment (UE), based on a first configuration, a sensing-based resource selection procedure to obtain a set of candidate single-slot sidelink (SL) positioning reference signal (SL-PRS) resources to be used for transmission, wherein a candidate single-slot SL-PRS resource is uniquely identified by a SL-PRS resource index within a set of SL-PRS resource ID(s) provided by a higher layer and a slot index; passing the set of candidate single-slot SL-PRS resources to the higher layer for selection; receiving an indication of selected single-slot SL-PRS resources from the higher layer; transmitting, by the first UE, a SL-PRS signal using selected single-slot SL-PRS resources; and transmitting, by the first UE, in a same slot including the SL-PRS signal, a PSCCH signal carrying a sidelink control information (SCI).

Provided herein is a method of resource allocation, the method including: receiving, by a first user equipment (UE), a first configuration including sidelink (SL) positioning reference signal (SL-PRS) time information and a number of configured frequency resources allocated for SL-PRS transmission; performing, based on the first configuration, a sensing-based resource selection procedure to obtain a set of candidate single-slot SL-PRS resources to be used for transmission, wherein a candidate single-slot SL-PRS resource is uniquely identified by a SL-PRS resource index within a set of SL-PRS resource ID(s) provided by a higher layer and a slot index; passing the set of candidate single-slot SL-PRS resources to the higher layer for selection; receiving an indication of selected single-slot SL-PRS resources from the higher layer; and transmitting, by the first UE, a SL-PRS signal using selected single-slot SL-PRS resources, wherein the SL-PRS signal is associated with a PSCCH transmission carrying a sidelink control information (SCI) in a same slot as the SL-PRS signal using the selected single-slot SL-PRS resources.

In some embodiments, the number of configured frequency resources allocated for a dedicated resource pool for SL-PRS transmission, and wherein each selected SL-PRS resource candidate occupies a full bandwidth of the dedicated resource pool in a frequency domain.

In some embodiments, more than one UE transmits in the same slot in a time-division multiplexing (TDM) manner with different SL-PRS resource IDs.

In some embodiments, the SCI comprises a resource ID indication for the SL-PRS signal.

In some embodiments, the performing the sensing is based on a reference signal received power (RSRP) threshold, wherein an RSRP is measured on the set of candidate single-slot SL-PRS resources.

In some embodiments, the SL-PRS signal is associated with an L1 transmission priority.

In some embodiments, the value of L1 transmission priority is included in SCI carried by a physical sidelink control channel (PSCCH) associated with the SL-PRS signal.

In some embodiments, the RSRP threshold is associated with a first transmission priority in a received SCI and associated with a second transmission priority of selected SL-PRS resources.

In some embodiments, the SL-PRS signal is associated with a remaining packet delay budget.

Also provided herein is a first user equipment (UE) configured to perform resource allocation, the first UE including: a non-transitory memory storing instructions; and a processor configured to execute the instructions to perform operations including: receiving, by the first UE, a first configuration, the first configuration including a set of sidelink (SL) positioning reference signal (SL-PRS) time information and a number of configured frequency resources allocated for the transmission of both a data signal and a SL-PRS signal; determining by the first UE whether candidate single-slot SL-PRS resources can be selected for SL-PRS transmission, wherein the determining of the candidate single-slot SL-PRS resources comprises: performing a sensing-based resource selection procedure to obtain a set of candidate single-slot SL-PRS resources to be used for transmission wherein a candidate single-slot SL-PRS resource is uniquely identified by a SL-PRS resource index within a set of SL-PRS resource IDs provided by a higher layer, a slot index, and passing the set of candidate single-slot SL-PRS resources to the higher layer for selection; and transmitting, by the first UE the SL-PRS signal using selected single-slot SL-PRS resources, wherein the SL-PRS signal is associated with a PSCCH transmission carrying a second stage SCI in the same slot.

In some embodiments, the UE decodes both a first stage SCI and the second stage SCI to find the resource allocation for both the data signal and the SL-PRS signal when performing the sensing-based resource selection procedure.

In some embodiments, the first UE considers possible periods for data and a candidate SL-PRS signal when performing sensing-based resource selection to avoid consistent collisions between the SL-PRS signal and a second SL-PRS signal of a neighboring UE.

In some embodiments, the second stage SCI includes a resource ID indication for the SL-PRS signal.

In some embodiments, the number of configured frequency resources are allocated for a shared resource pool.

In some embodiments, the candidate single-slot SL-PRS resource is further identified by a subchannel index in a frequency domain.

In some embodiments, the SL-PRS signal is associated with an L1 transmission priority.

In some embodiments, an RSRP threshold is associated with an L1 transmission priority;

In some embodiments, the SL-PRS signal is associated with a remaining packet delay budget.

In some embodiments, the SL-PRS signal is associated with a number of sub-channels to be used in the slot.

Also provided herein is a method by a user equipment (UE) of communicating data in a vehicle to everything (V2X) mode 2 system, the method including: forming an allocation of resource elements within a slot, wherein a first assignment of a physical sidelink shared channel demodulation reference signal (PSSCH DMRS) to a first resource element has a priority over a second assignment of a sidelink (SL) positioning reference signal (SL-PRS) to the first resource element, such that a SL-PRS signal is transmitted in a second symbol separate from any symbol configured with PSSCH DMRS, and wherein the allocation of resource elements within the slot comprises a third assignment of data to a second resource element; modulating an orthogonal frequency division multiplex (OFDM) signal based on the allocation of resource elements; and transmitting the OFDM signal.

Also provided herein is a method of resource allocation, the method including: receiving, by a first user equipment (UE), a first configuration parameter from a higher layer, the first configuration parameter including a first index indicating a comb size, a first comb offset, a first subcarrier offset and a first number of sidelink positioning reference signal (SL-PRS) symbols for a first SL-PRS transmission in a dedicated resource pool; receiving, by a second UE, a second configuration parameter from the higher layer, the second configuration parameter including a second index, the second index indicating the comb size, a second comb offset, a second subcarrier offset and a second number of SL-PRS symbols for a second SL-PRS transmission in the dedicated resource pool; transmitting, by the first UE, a first SL-PRS signal according to the first configuration parameter and transmitting by the second UE a second SL-PRS signal according to the first configuration parameter, wherein the first SL-PRS signal and the second SL-PRS signal are allocated in two sets of non-overlapping symbols in a slot.

In some embodiments, the first configuration parameter and the second configuration parameter are associated with the dedicated resource pool, and the dedicated resource pool is not associated with data transmission.

BRIEF DESCRIPTION OF DRAWINGS

In the following section, the aspects of the subject matter disclosed herein will be described with reference to exemplary embodiments illustrated in the figures, in which:

FIG. 1A illustrates a 5G system.

FIG. 1B illustrates the protocol stack used in V2X.

FIG. 2 illustrates a positioning use case, according to an exemplary embodiment.

FIG. 3A illustrates example logic for resource allocation from a dedicated resource pool (no data), according to an exemplary embodiment.

FIG. 3B illustrates additional example logic for resource allocation from a dedicated resource pool (no data), according to an exemplary embodiment.

FIG. 3C illustrates example logic for resource allocation (with data), according to an exemplary embodiment.

FIG. 4 is an example of PRS resource allocation from a dedicated resource pool, according to an exemplary embodiment.

FIG. 5 illustrates a data communication use case, according to an exemplary embodiment.

FIG. 6 illustrates example logic for resource allocation in a shared resource pool (includes data), according to an exemplary embodiment.

FIG. 7 is an example of allocating SL-PRS in a slot used for data transmission, according to an exemplary embodiment.

FIG. 8 is an example of a shared resource pool.

FIG. 9 is logic for building and transmitting a slot with SL-PRS and PSCCH, according to an example embodiment.

FIG. 10 is logic for selecting a comb offset for SL-PRS in a hybrid resource pool, according to an example embodiment.

FIG. 11 is logic for using a DMRS to indicate an SCI for data or an SCI for SL-PRS, according to an example embodiment.

FIG. 12 is a block diagram of an electronic device such as UE 1 or UE 2, according to an embodiment.

DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

Mode 2 and Sensing

Mode 2 is for UE autonomous resource selection. Its basic structure is of a UE sensing, within a configured resource pool, which resources are not in use by other UEs with higher-priority traffic, and choosing an appropriate amount of such resources for its own transmissions. Having selected such resources, the UE can transmit and re-transmit in them a certain number of times, or until a cause of resource reselection is triggered.

The mode 2 sensing procedure can select and then reserve resources for a variety of purposes reflecting that NR V2X introduces sidelink HARQ in support of unicast and groupcast in the physical layer. It may reserve resources to be used for a number of blind retransmissions or HARQ-feedback-based retransmissions of a transport block, in which case the resources are indicated in the SCIs scheduling the transport block. Alternatively, it may select resources to be used for the initial transmission of a later transport block, in which case the resources are indicated in an SCI scheduling a current transport block, in a manner similar to the LTE-V2X scheme. Finally, an initial transmission of a transport block can be performed after sensing and resource selection, but without a reservation.

The first-stage SCIs transmitted by UEs on PSCCH indicate the time-frequency resources in which the UE will transmit a PSSCH. These SCI transmissions are used by sensing UEs to maintain a record of which resources have been reserved by other UEs in the recent past. When a resource selection is triggered (e.g. by traffic arrival or a re-selection trigger), the UE considers a sensing window which starts a preconfigured time in the past and finishes shortly before the trigger time. The window can be either 1100 ms or 100 ms wide, with the intention that the 100 ms option is particularly useful for aperiodic traffic, and 1100 ms particularly for periodic traffic. A sensing UE also measures the side link reference signal received power (SL-RSRP) in the slots of the sensing window, which implies the level of interference which would be caused and experienced if the sensing UE were to transmit in them. In NR-V2X, SL-RSRP is a pre configurable measurement of either PSSCH-RSRP or PSCCH-RSRP.

The sensing UE then selects resources for its retransmissions from within a resource selection window. The window starts shortly after the trigger for reselection of resources, and cannot be longer than the remaining latency budget of the packet due to be transmitted. Reserved resources in the selection window with SL-RSRP above a threshold are excluded from being candidates by the sensing UE, with the threshold set according to the priorities of the traffic of the sensing and transmitting UEs. Thus, a higher priority transmission from a sensing UE can occupy resources which are reserved by a transmitting UE with sufficiently low SL-RSRP and sufficiently lower-priority traffic.

If the set of resources in the selection window which have not been excluded is less than a certain proportion of the available resources within the window, the SL-RSRP exclusion threshold is relaxed in 3 dB steps. The proportion is set by configuration to 20%, 35%, or 50% for each traffic priority. The UE selects an appropriate amount of resources randomly from this non-excluded set. The resources selected are not in general periodic. Up to three resources can be indicated in each SCI transmission, which can each be independently located in time and frequency. When the indicated resources are for semi-persistent transmission of another transport block, the range of supported periodicities is expanded compared to LTE-V2X, in order to cover the broader set of envisioned use cases in NR-V2X.

Shortly before transmitting in a reserved resource, a sensing UE re-evaluates the set of resources from which it can select, to check whether its intended transmission is still suitable, taking account of late-arriving SCIs due, typically, to an aperiodic higher-priority service starting to transmit after the end of the original sensing window. If the reserved resources would not be part of the set for selection at this time (13), then new resources are selected from the updated resource selection window. The cut-off time $T3$ is long enough before transmission to allow the UE to perform the calculations relating to resource re-selection.

There are a number of triggers for resource reselection, several of which are similar to LTE-V2X. In addition, there is the possibility to configure a resource pool with a pre-emption function designed to help accommodate aperiodic sidelink traffic, so that a UE reselects all the resources it has already reserved in a particular slot if another nearby UE with higher priority indicates it will transmit in any of them, implying a high-priority aperiodic traffic arrival at the other UE, and the SL-RSRP is above the exclusion threshold. The application of pre-emption can apply between all priorities of data traffic, or only when the priority of the pre-empting traffic is higher than a threshold and higher than that of the pre-empted traffic. A UE does not need to consider the possibility of pre-emption later than time $T3$ before the particular slot containing the reserved resources.

The detailed steps of the Mode 2 resource selection procedure are captured in 3GPP TS 38.214. Specifically, in resource allocation Mode 2, the higher layer can request the UE to determine a subset of resources from which the higher layer will select resources for PSSCH/PSCCH transmission. To trigger this procedure, in slot *n,* the higher layer provides the following parameters for this PSSCH/PSCCH transmission:

    i) the resource pool from which the resources are to be reported;

    ii) L1 priority, $prio_{TX}$;

iii) the remaining packet delay budget;

iv) the number of sub-channels to be used for the PSSCH/PSCCH transmission in a slot, $L_{subCH}$;

v) optionally, the resource reservation interval, $P_{rsvp\_TX}$, in units of ms.

The following higher layer parameters affect this procedure:

i) *sl-SelectionWindowList*: internal parameter $T_{2min}$ is set to the corresponding value from higher layer parameter *sl-SelectionWindowList* for the given value of *prio_TX*.

ii) *sl-Thres-RSRP-List:* this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j = prio_{TX}$.

iii) *sl-RS-ForSensing* selects if the UE uses the PSSCH-RSRP or PSCCH-RSRP measurement.

iv) *sl-ResourceReservePeriodList*

v) *sl-SensingWindow:* internal parameter $T_0$ is defined as the number of slots corresponding to *sl-SensingWindow* msec

vi) *sl-TxPercentageList*: internal parameter $X$ for a given *prio_TX* is defined as *sl-TxPercentageList (prio_TX)* converted from percentage to ratio

vii) *sl-PreemptionEnable:* if *sl-PreemptionEnable* is provided, and if it is not equal to 'enabled', internal parameter $prio_{pre}$ is set to the higher layer provided parameter *sl-PreemptionEnable*

The resource reservation interval, $P_{rsvp\_TX}$, if provided, is converted from units of *ms* to units of logical slots, resulting in $P'_{rsvp\_TX}$. $\left(t_0^{SL}, t_1^{SL}, t_2^{SL}, \ldots\right)$ denotes the set of slots which can belong to a sidelink resource pool.

The following steps are used.

A candidate single-slot resource for transmission $R_{x,y}$ is defined as a set of $L_{subCH}$ contiguous sub-channels with sub-channel $x+j$ in slot $t_y^{SL}$ where $j = 0,\ldots,L_{subCH} - 1$. The UE shall assume that any set of $L_{subCH}$ contiguous sub-channels included in the corresponding resource pool within the time interval $[n + T_1, n + T_2]$ corresponds to one candidate single-slot resource, where selection of $T_1$ is up to UE implementation under $0 \le T_1 \le T_{proc,1}$, where $T_{proc,1}$ is defined in slots in [6]; If $T_{2min}$ is shorter than the remaining packet delay budget (in slots) then $T_2$ is up to UE implementation subject to $T_{2min} \le T_2 \le$ remaining packet budget (in slots); otherwise $T_2$ is set to the remaining packet delay budget (in slots). The total number of candidate single-slot resources is denoted by $M_{total}$.

The sensing window is defined by the range of slots $[n - T_0, n- T_{proc,0})$ where $T_0$ is defined above and $T_{proc,0}$ is defined in slots. The UE shall monitor slots which can belong to a sidelink resource pool within the sensing window except for those in which its own transmissions occur. The UE shall perform the behavior in the following steps based on the decoded PSCCH and the measured RSRP in these slots.

The internal parameter $Th(p_i, p_j)$ is set to the corresponding value of RSRP threshold indicated by the i-th field in *sl-Thres-RSRP-List,* where $i = p_i + (p_j - 1) * 8$.

The set $S_A$ is initialized to the set of all the candidate single-slot resources.

The UE shall exclude any candidate single-slot resource $R_{x,y}$ from the set $S_A$ if it meets all the following conditions:

The UE has not monitored slot $t_m^{SL}$ in Step 2.

For any periodicity value allowed by the higher layer parameter *reservationPeriodAllowed* and a hypothetical SCI format 0-1 received in slot $t_m^{SL}$ with "Resource reservation period" field set to that periodicity value and indicating all subchannels of the resource pool in this slot, condition c in step VI would be met.

The UE shall exclude any candidate single-slot resource $R_{x,y}$ from the set $S_A$ if it meets all the following conditions.

The UE receives an SCI format 0-1 in slot $t_m^{SL}$, and "Resource reservation period" field, if present, and "Priority" field in the received SCI format 0-1 indicate the values $P_{rsvp\_RX}$ and $prio_{RX}$, respectively;

The RSRP measurement performed, according to received SCI format 0-1, is higher than $Th(prio_{RX})$;

The SCI format received in slot $t_m^{SL}$ or the same SCI format which, if and only if the "Resource reservation period" field is present in the received SCI format 0-1, is assumed to be received in slot(s) $t_{m+q \times P'_{rsvp\_RX}}^{SL}$ determines the set of resource blocks and slots which overlaps with $R_{x,y+j \times P'_{rsvp\_TX}}$ for q=1, 2, ..., Q and j=0, 1, ...,

$C_{resel}$ - 1. Here, $P'_{rsvp\_RX}$ is $P_{rsvp\_RX}$ converted to

$$Q = \left\lceil \frac{T_{scal}}{P_{rsvp\_RX}} \right\rceil$$

units of logical slots, if $P_{rsvp\_RX}$ < $T_{scal}$ and $n' - m \le P'_{rsvp\_RX}$, where $t_n^{SL} = n$ if slot n belongs to the set $\left( t_0^{SL}, t_1^{SL}, \ldots, t_{Tmax}^{SL} \right)$, otherwise slot $t_{n'}^{SL}$ is the first slot after slot n belonging to the set $\left( t_0^{SL}, t_1^{SL}, \ldots, t_{Tmax}^{SL} \right)$; otherwise $Q$ = 1. $T_{scal}$ is set to selection window size $T_2$ converted to units of msec.

If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.

UE shall report remaining of set $S_A$ to higher layers, and high layer then randomly select a candidate resource for transmission.

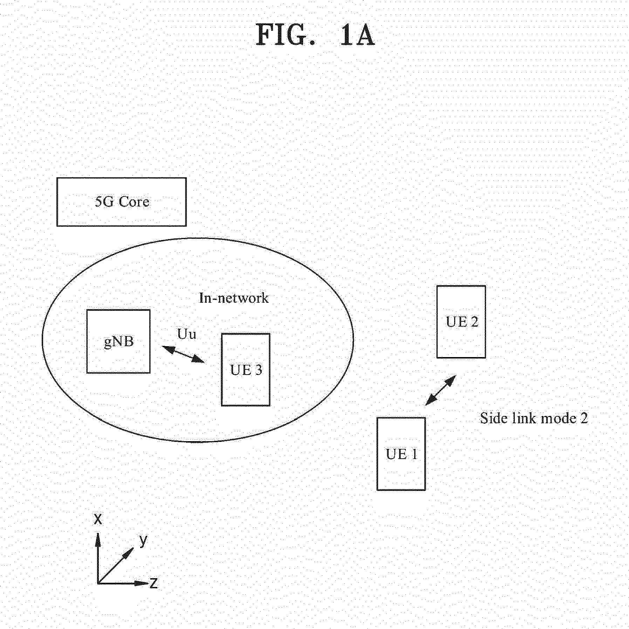

FIG. 1A illustrates an example 5G system. FIG. 1A includes a schematic representation of a 5G core, in-network communication over a Uu interface between a gNB and a UE (user equipment, labelled as UE 3), a UE 1 in communication with a UE 2 using side link mode 2, and x, y, z coordinate axes referring to geographic position.

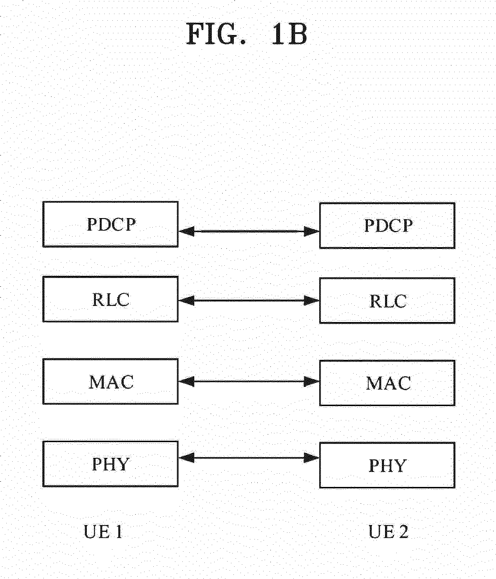

FIG. 1B illustrates a protocol stack diagram for UE 1 and UE 2. The protocol stack includes PDCP, RLC, MAC and PHY layers (respectively packet data convergence protocol, radio link control, medium access control, and physical). Interlayer communication is illustrated. As usual, all actual communication occurs at the PHY layer.

## Positioning Use Case (No Data Transmission, Dedicated Resource Pool)

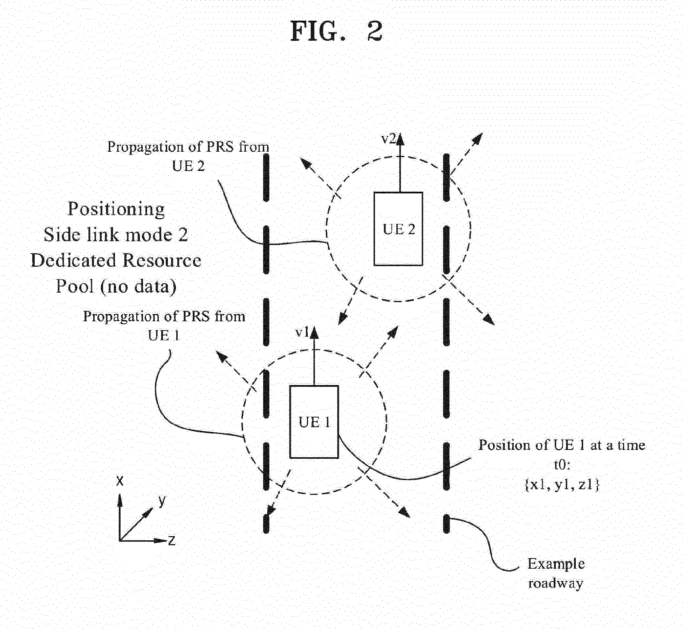

FIG. 2 illustrates a positioning use case, according to an embodiment. A UE 1 travelling with velocity v1 on a roadway may be overtaking a UE 2 travelling with velocity v2. The shoulders of the roadway are shown with heavy dashed vertical lines in FIG. 2. The UE 1 has a position {x1, y1, z1} at a time t0. The UE 1 and the UE 2 transmit PRS to assist in positioning to increase highway safety. The UE 1 seeks to receive an estimate of its position. That is, UE 1 seeks an estimate of {x1, y1, z1} at the time t0. The transmission of PRS from UE 1 is shown with a dashed circle and outward-pointing arrows, similarly for UE 2. Based on the reception of the PRS from the UE 1, the UE 2 along with possibly other participating nodes in a V2X system. The other participating nodes may be roadside units (RSUs), and/or a location management function (LMF) in the 5G core of FIG. 1. The UE 2 may not be able to reach the LMF if the UE 2 is not in network. The UE 2 and/or the LMF can estimate {x1, y1, z1} at time t0 and UE 2 can transmit the estimate to UE 1. UE 1 can then adjust the overtaking maneuver with respect to the roadway and UE 2 to maintain safety, and avoid, for example, physical collision with the vehicle of UE 2 or avoid departing the roadway.

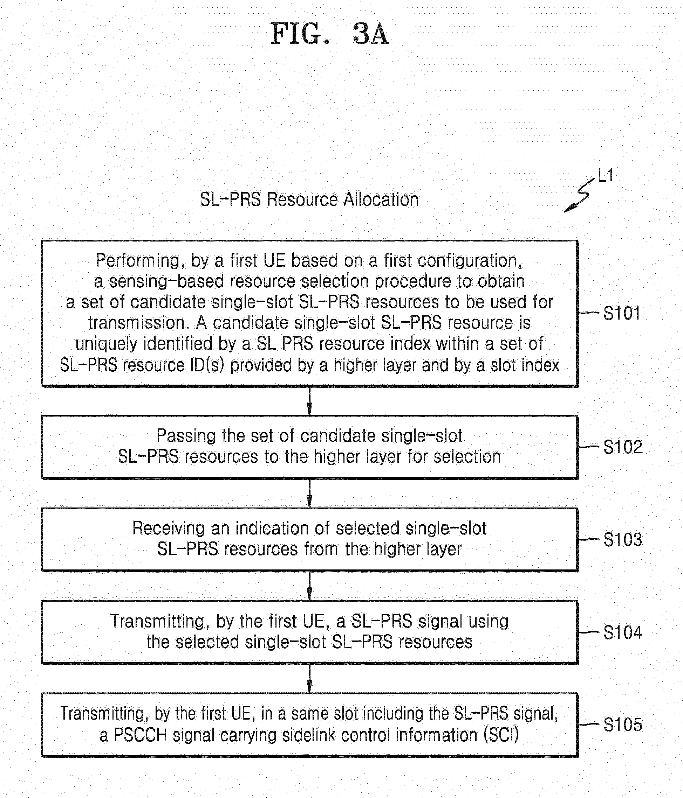

FIG. 3A illustrates logic for L1 transmission of PRS by a UE in the positioning use case. The UE using the logic L1 of FIG. 3A, may be, as a non-limiting example, the UE 1 of FIG. 2.

At operation S101, UE 1 performs a sensing-based resource selection procedure to obtain a set of candidate single-slot SL-PRS resources to be used for transmission. A candidate single-slot SL-PRS resource is uniquely identified by a SL-PRS resource index within a set of SL-PRS reference ID(s) provided by a higher layer and by a slot index.

At operation S102, UE 1 passes the set of candidate single-slot SL-PRS resources to the higher layer for selection.

At operation S103, the UE 1 receives the selected single-slot SL-PRS resources from the higher layer.

In some embodiments, the UE 1 determines if a candidate single-slot resource can be selected for SL-PRS transmission. This determination may be based on sensing in side link mode 2. The UE determines a SL-PRS resource ID and slot index. Specifically, as described below, the transmission of the SL-PRS depends on choosing values for each of three degrees of freedom (x: frequency, y: time, z: index).

In some embodiments, single-slot-Single-SL-PRS-index resource candidates are considered rather than single-slot resource candidates used when performing resource selection for a data transmission. A candidate single-slot-Single-SL-PRS-index resource for transmission $R_{x, y, z}$ is defined as a set of $L_{subCH}$ contiguous sub-channels with sub-channel x+j in slot $t_y^{SL}$ where j = 0,...,$L_{subCH}$ - 1 and SL-PRS index . The value of $L_{subCH}$ can be either obtained from:

i) the resource selection assistance request or from resource pool (pre)-configuration in case of resource selection assistance for SL-PRS transmission. The value can be an exact number of subchannels or an index to a (pre)-configured value per resource pool, or

ii) from higher layers that trigger the resource selection for SL-PRS transmission or from resource pool (pre)-configuration. The value can be an exact number of subchannels or an index to a (pre)-configured value per resource pool.

UE 1 assumes that any set of $L_{subCH}$ contiguous sub-channels included in the corresponding resource pool within the time interval $[n + T_1, n + T_2]$ correspond to one candidate single-slot-Single-SL-PRS-index resource, where selection of $T_1$ is up to UE implementation under $0 \leq T_1 \leq T_{proc,1}$, where $T_{proc,1}$ is defined in slots. In case of a shared resource pool or $T_1 = 0$ in case of a dedicated resource pool; If $T_{2min}$ is shorter than the remaining packet delay budget (in slots) then $T_2$ is up to UE implementation subject to $T_{2min} \leq T_2 \leq$ remaining packet budget (in slots); otherwise $T_2$ is set to the remaining packet delay budget (in slots). The total number of candidate single-slot resources is denoted by $M_{total}$.

At operation S104, the UE 1 transmits a SL-PRS signal using the selected single-slot SL-PRS resources.

At operation S105, the first UE transmits, in a same slot including the SL-PRS signal, a PSCCH signal carrying sidelink control information (SCI).

In some embodiments of the logic L1, each of the selected SL-PRS resource candidates can occupy the full bandwidth of the dedicated resource pool in the frequency domain.

In some embodiments of the logic L1, more than one UE transmits in the same slot in a Time-division multiplexing (TDM) manner with different SL-PRs resource IDs.

In some embodiments of the logic L1, the SCI includes the resource ID indication for the transmitted SL-PRS signals.

In some embodiments of the logic L1, the sensing-based resource selection is based on an RSRP threshold, wherein the RSRP is measured on the candidate single-slot SL-PRS resources.

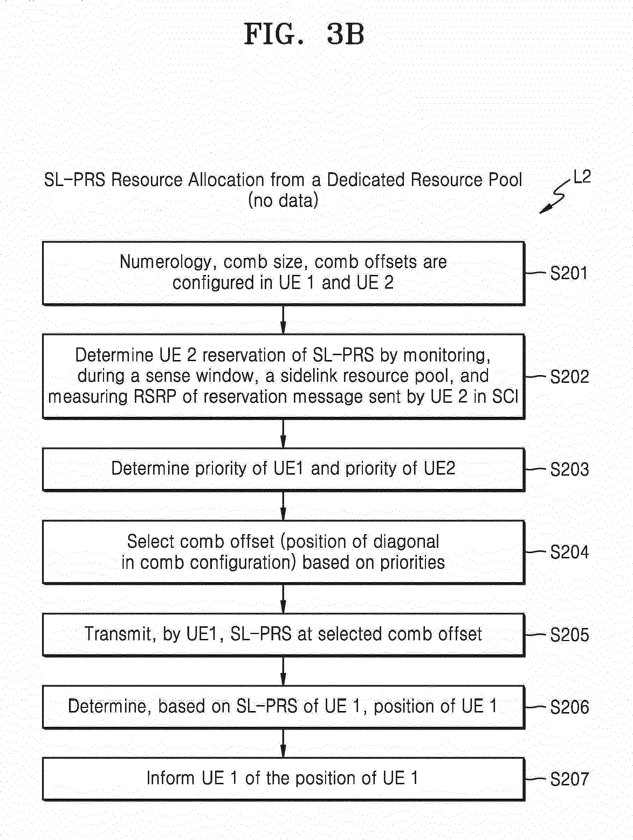

FIG. 3B illustrates second exemplary logic L2 for the positioning use case.

In FIG. 3B, at operation S201, a numerology, comb size and comb offsets are configured in UE 1 and UE 2. This configuration may occur while UE 1 and UE 2 are in network (see UE 3 which is in network in FIG. 1A). Similarly to logic L1, this may be referred to as receiving configuration information from a higher layer.

At operation S202, UE 1 may determine a UE 2 reservation of reservation of SL-PRS by monitoring, during a sense window, a sidelink resource pool, and measuring RSRP of reservation message sent by UE 2 in SCI.

At operation S203, UE 1 may determine its priority with respect to UE 2.

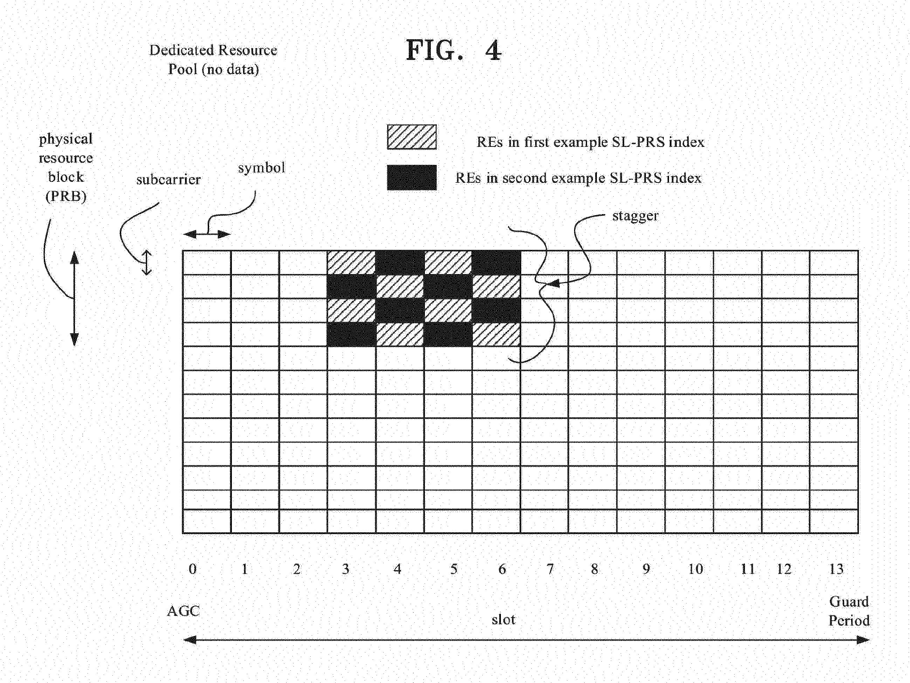

At operation S204, UE 1 may select a comb offset based on priorities. The comb offset uniquely specifies a diagonal in a stagger arrangement (see FIG. 4).

At operation S205, the UE 1 may transmit the SL-PRS at the selected comb offset (see the transmission of PRS by UE 1 in FIG. 2).

At operation S206, the position of UE 1 may be determined based on the SL-PRS of UE 1. This determination may be performed by UE 1, UE 2 or the LMF of the 5G core.

At operation S207, the UE 1 is informed of the position estimate. This may be performed by UE 2. The UE 1 can then, for example, safely maneuver on a roadway such as shown in FIG. 2.

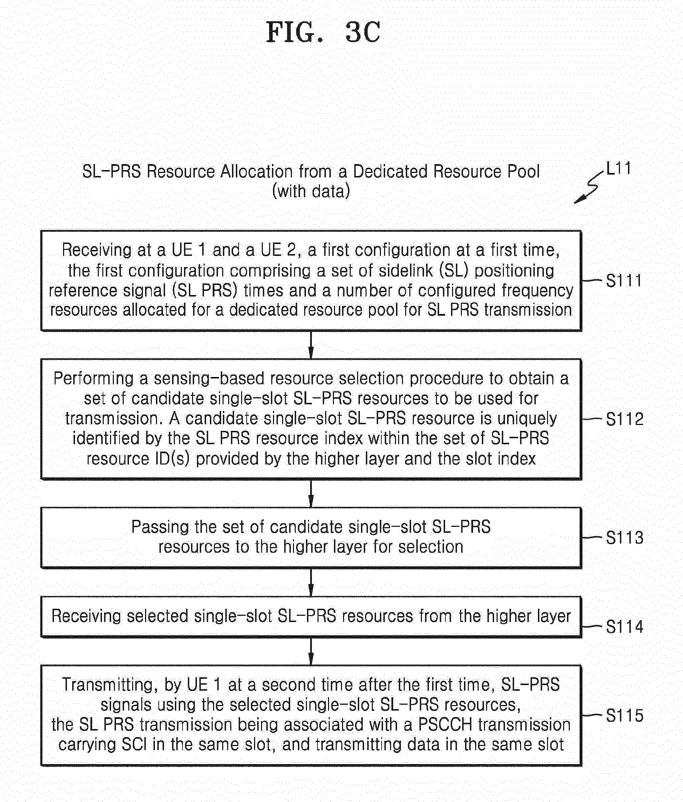

FIG. 3C provides logic L11 for allocation of SL-PRS and transmission of data. Operations S111-S114 are similar to operations S101-S104 of FIG. 3A and the description is not repeated. Operation S 115 is different from operation S105 of FIG. 3A in that data is transmitted in the same slot.

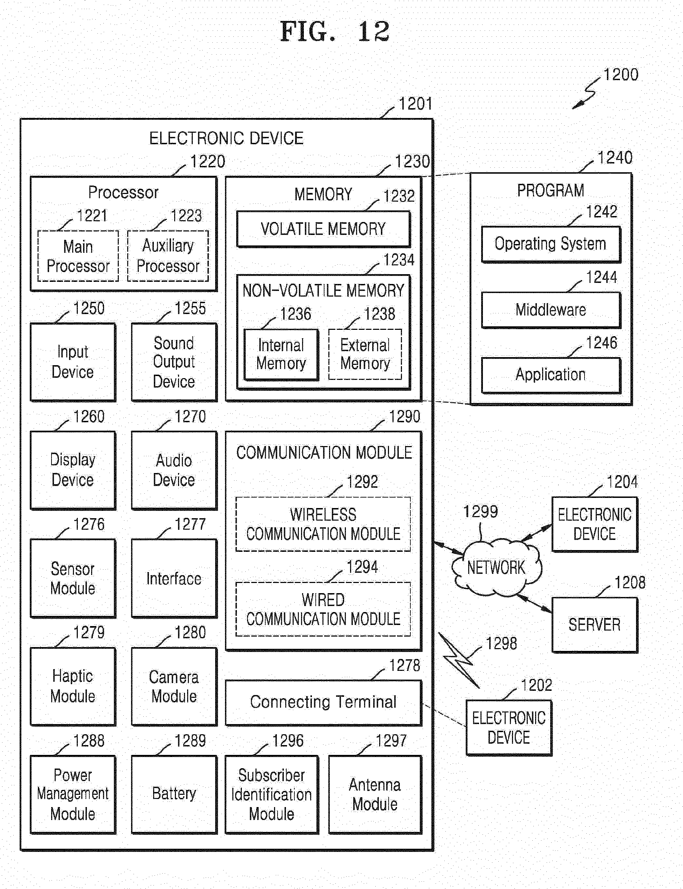

FIG. 4 illustrates a time-frequency grid using a dedicated resource pool (no data transmission). FIG. 4 is associated with the use case of FIG. 2 (positioning). In FIG. 4, the x-axis is a time axis and the y-axis is a frequency axis. The x-axis is marked off in symbol periods. The $0^{th}$ symbol is for AGC and the $13^{th}$ symbol is used for a Guard Period. The y-axis is marked off in subcarriers. In the example of FIG. 4, 12 subcarriers are shown. One symbol period of one subcarrier is referred to as a resource element (RE).

In some embodiments, the SL-PRS transmitted by UE 1 may be associated with an L1 transmission priority. The SL-PRS transmitted by UE 1 may be associated with a remaining packet delay budget. The SL-PRS transmitted by UE 1 may be associated with a number of sub-channels to be used in a slot. In some embodiments, the comb value is 2, 4, 6 or 12.

In the example of FIG. 4, the UE 2 may be transmitting PRS on the REs marked with solid black. This transmission is within one or more subchannels (one subchannel is illustrated in FIG. 4). The UE 1 may use the logic L1 of FIG. 3A or the logic L2 of FIG. 3B to select the comb offset providing the REs shown with the diagonal hatching. In FIG. 4, the relation of one diagonal to another is referred to as a stagger. The term "comb" in 5G refers to each symbol of the PRS having a comb structure in frequency such that every Nth subcarrier is used. The value N=2 is illustrated in FIG. 4. "Comb offset" refers to whether a chosen diagonal begins on the first subcarrier, up to the Nth subcarrier.

In some embodiments of FIG. 4, a value of a priority is included in an SCI carried by PSCCH associated with an SL-PRS transmission.

In some embodiments of FIG. 4, an RSRP threshold is associated the values of the priority in a received SCI and the priority of the transmission of selected SL-PRS resources.

In some embodiments of FIG. 4, the UE 1 shall decode both 1st and 2nd stage SCI to find the resource allocation for both data and SL-PRS when performing sensing-based resource selection.

In some embodiments of FIG. 4, the UE 1 shall consider the possible periods for data and SL-PRS when performing sensing-based resource selection to avoid consistent collisions between SL-PRS transmissions of neighboring UEs.

In some embodiments of FIG. 4, the 2nd stage SCI includes the resource ID indication for the transmitted SL-PRS signals.

In some embodiments of FIG. 4, an RSRP threshold is associated the priority of the transmission of selected SL-PRS resources;

Coordination of PRS With Data Transmission (Shared Resource Pool)

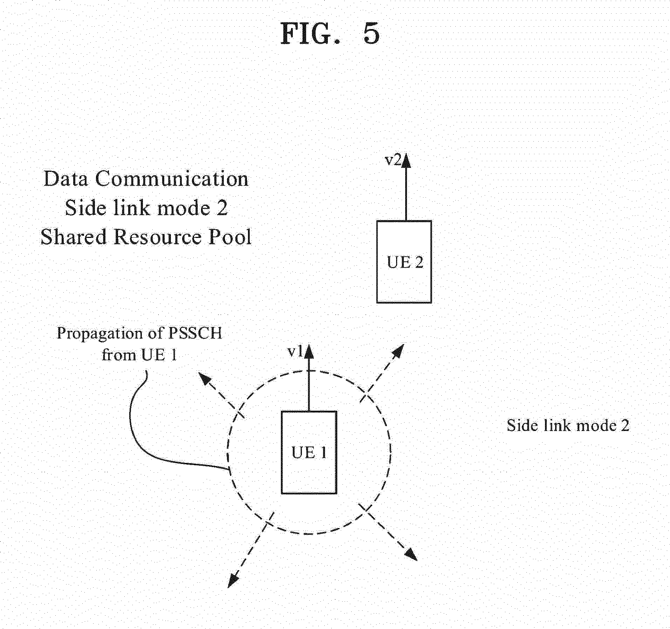

FIG. 5 illustrates a use case of coordinating PRS transmission when using a shared resource pool including data transmission. FIG. 5 illustrates a UE 1 and UE 2 independently communicating data in side link mode 2. The UE is transmitting PRS and PSSCH.

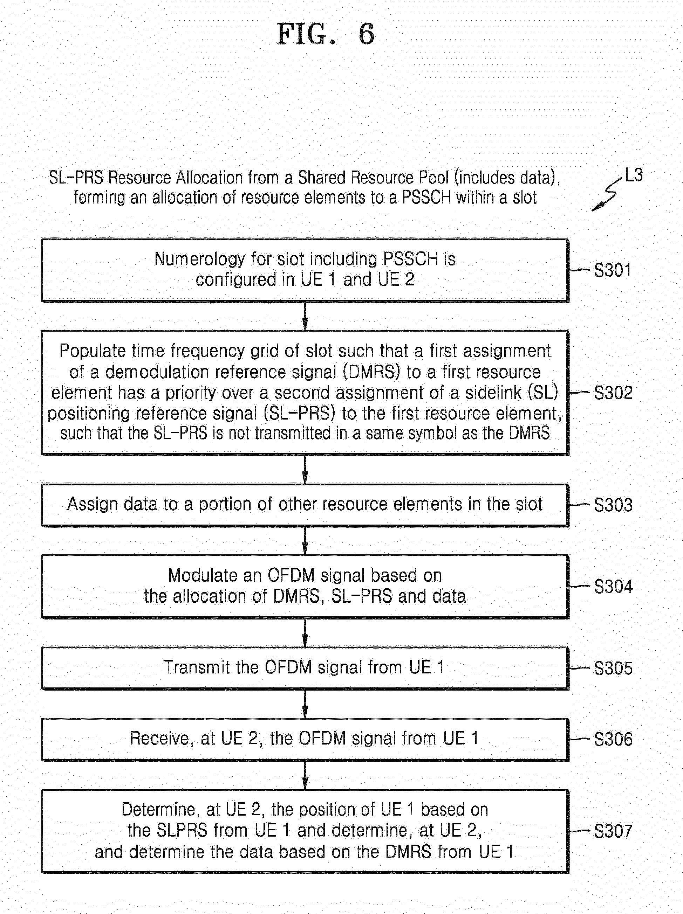

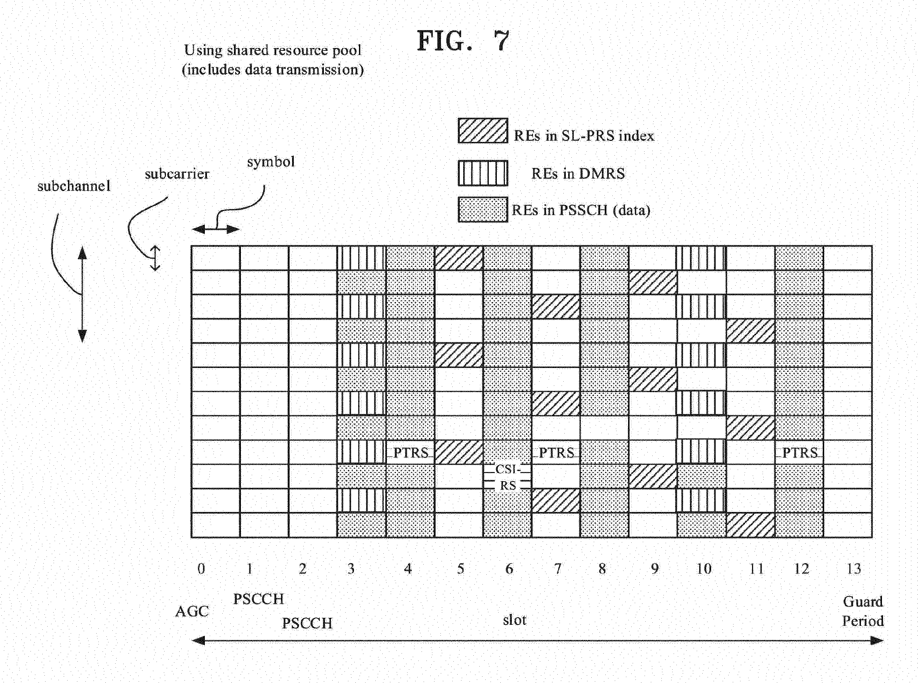

FIG. 6 provides exemplary logic L3 for forming an allocation of resource elements within a slot also including PSSCH (data). An example of the populated slot is shown in FIG. 7.

Returning to FIG. 6, at operation S301, a numerology is configured in UE 1 and UE 2. This may be while the UE 1 and UE 2 are in network (see FIG. 1). This information may be received from higher layers.

At operation S302, the UE 1 populates a time frequency grid in the slot such that a first assignment of a demodulation reference signal (DMRS) to a first resource element has a priority over a second assignment of a sidelink (SL) positioning reference signal (SL-PRS) to the first resource element, such that the SL-PRS is not transmitted in a same symbol as the DMRS.

At operation S303, the UE 1 assigns data to a portion of other REs in the slot.

At operation S304 an OFDM signal is modulated based on the allocation of DMRS, SL-PRS and data to the slot. At operation S305, the OFDM signal is transmitted by UE 1.

At operation S306, the OFDM signal (affected by propagation and noise) is received at UE 2.

At operation S307, the UE 2 determined the position of UE 1 based on the SL-PRS from UE 1 and determines the data transmitted over the PSSCH by the UE 1.

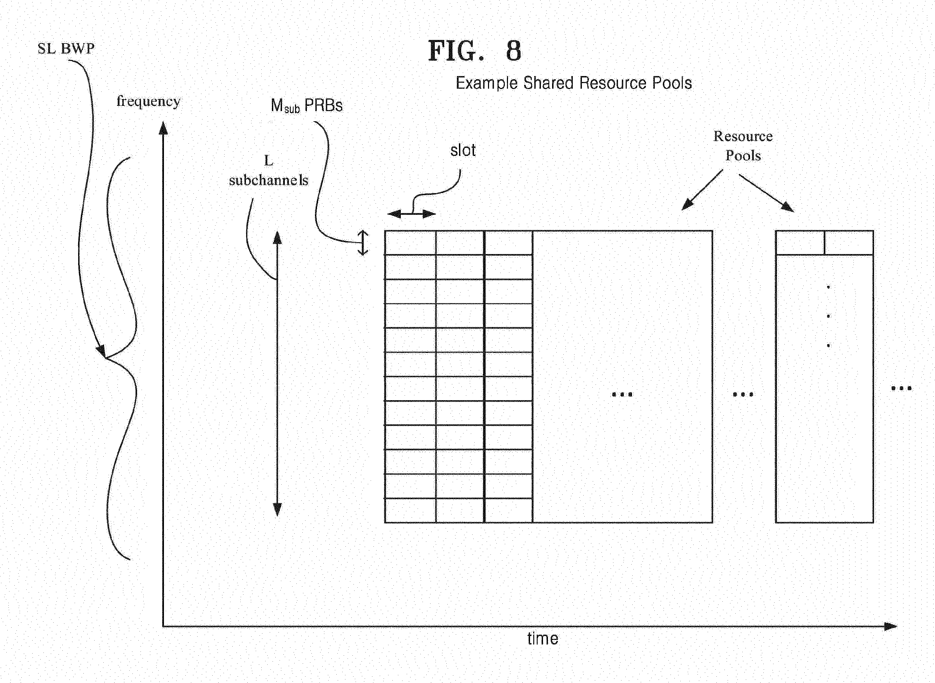

FIG. 7 illustrates one slot of 14 symbols. FIG. 7 has a similar layout to FIG. 4, but FIG. 7 is for a shared resource pool. That is, FIG. 7 is a time-frequency allocation using a shared resource pool, and includes data transmission. An example of time-frequency allocation for shared resource pools is shown in FIG. 8.

Returning to FIG. 7, the x-axis is a time axis and the y-axis is a frequency axis. The x-axis is marked off in symbol periods. The y-axis is marked off in subcarriers. In the example of FIG. 7, 12 subcarriers are shown. In an example, 12 REs represent a resource block. A subchannel is a number of REs. In FIG. 7, REs used for DMRS are marked with vertical hatching. REs used for PSSCH (data) are marked with dot hatching. REs used for PTRS are marked with horizontal hatching and with the label "PTRS." REs used for CSI-RS are marked with horizontal hatching and with the label "CSI-RS." REs used for SL-PRS with a specific SL-PRS index are marked with diagonal hatching. The $0^{th}$, $1^{st}$, $2^{nd}$ and $13^{th}$ symbols are used for, respectively, AGC, PSCCH, PSCCH and Guard Period.

As seen in FIG. 7, for SL-PRS in a shared resource pool (includes data transmission), the SL-PRS symbols are not mapped to the PSSCH symbols carrying DMRS. In this configuration, UE multiplexing is allowed and N UEs can transmit SL-PRS at the same time if PRS has comb size of N.

In some embodiments, the slot of FIG. 7 is formed as follows. UE 1 receives a first configuration parameter from a higher layer at a first time, the first configuration parameter comprising a first index indicating a comb size, a first comb offset, and a first number of SL-PRS symbols for the SL-PRS transmission in a dedicated resource pool. UE 2 receives a second configuration parameter from the network at a second time, the second configuration parameter comprising a second index, the second configuration parameter comprising a second index indicating the comb value, a second subcarrier offset and a second number of SL-PRS symbols for the SL-PRS transmission in a dedicated resource pool.

FIG. 8 illustrates shared resource pools used in side link mode 2. The x-axis is time, the y-axis is frequency. A side link bandwidth part (SL BWP) is configured by the 5G Core. The shared resource pool uses L subchannels. Each subchannel includes Msub PRBs.

Hybrid Resource Pool

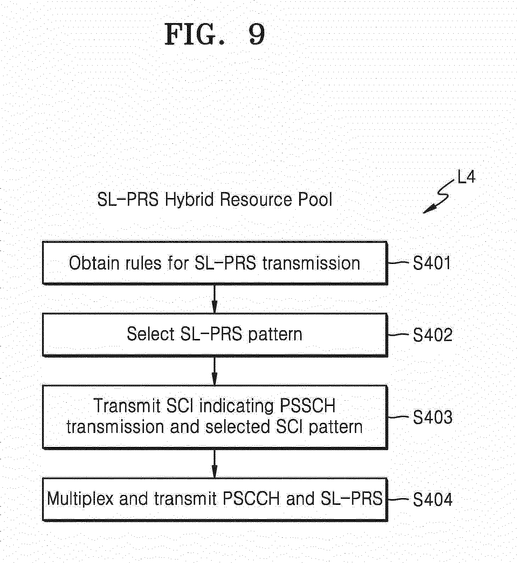

FIG. 9 illustrates logic L4 for a hybrid resource pool. At operation S401, the UE 1 obtains rules for SL-PRS transmission. At operation S402, the UE selects an SL-PRS pattern. At operation S403, the UE transmits SCI indicating PSSCH transmission pattern and selected SCI pattern. At operation S404 the UE 1 multiplexes and transmits the PSCCH and the SL-PRS.

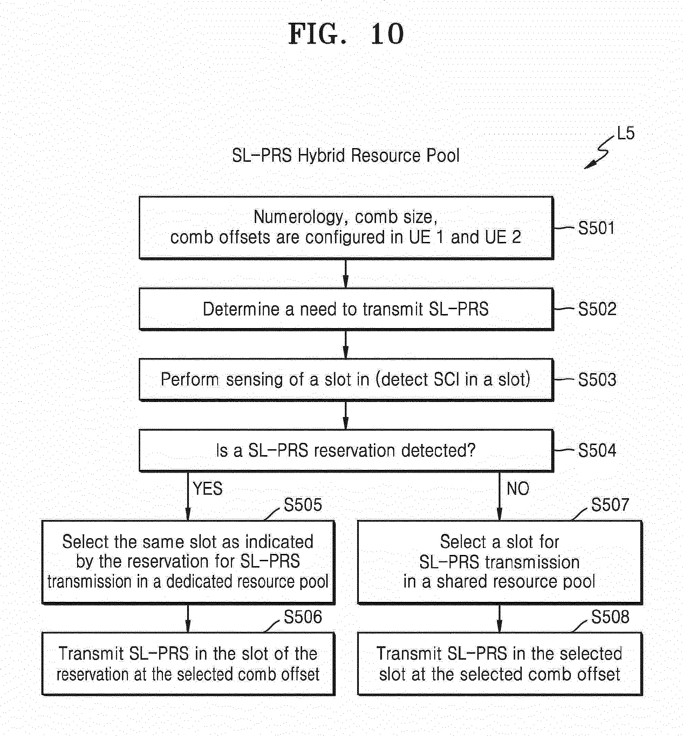

FIG. 10 illustrates alternative logic L5 for transmitting SL-PRS using a hybrid resource pool.

At operation S501, UE 1 and UE 2 obtain numerology, comb size and comb offsets. This is similar to S201 in FIG. 3B.

At operation S502, UE 1 determines a need to transmit SL-PRS.

At operation S503, the UE 1 performs sensing in a slot (detect SCI in a slot), similar to FIG. 8.

At operation, the UE determines whether an SL-PRS reservation is detected (for example, a reservation of UE 2). If yes, the logic flows to S505. If no, the logic flows to S507.

At operation S505, the UE 1 selects a comb offset in a same slot as indicated by the reservation of UE 2 for SL-PRS transmission in a dedicated resource pool. At operation S506, the UE 1 transmits SL-PRS in the slot of the reservation of UE 1, using the comb offset selected by UE 2.

In the alternative, if the logic flows to S507, at S507, the UE 2 selects an arbitrary comb offset and selects a slot for SL-PRS transmission in a shared resource pool using legacy mode 2 resource allocation of procedure of 5G Release 17. The UE 1 then transmits SL-PRS in the selected slot at the selected comb offset.

SCI Indication

Logic L6 provides exemplary logic for indication of SCI format.

At operation S601, the UE 1 obtains a DMRS configuration from the core network or from higher layers.

At operation S602, the UE 1 attempts to estimate the radio channel using a first DMRS based on the DMRS configuration. The first DMRS is for PSCCH.

At operation 603, if the estimation is successful, the logic flows to S604 and the UE 1 finds that a detected PSCCH indicates a data transmission (possibly from UE 2). At operation S605, the UE 1 then attempts to obtain SCI for a PSSCH indication for data (possibly from UE 2).

Returning to operation S603, if the attempted channel estimation is not successful, the logic flows to S610, where the UE 1 attempts to estimate the channel using a second DMRS. The second DMRS is for PSSCH. Based on embodiments, collision of the second DMRS is avoided.

At operation S611, if channel estimation with the second DMRS is successful, the logic flows to S613 and S614, which are similar to S604 and S605.

At operation S611, if the channel estimation with the second DMRS fails, the UE 1 concludes that there is no PSCCH to decode.

FIG. 12 is a block diagram of an electronic device in a network environment 1200, according to an embodiment.

Referring to FIG. 12, an electronic device 1201 in a network environment 1200 may communicate with an electronic device 1202 via a first network 1298 (e.g., a short-range wireless communication network), or an electronic device 1204 or a server 1208 via a second network 1299 (e.g., a long-range wireless communication network). The electronic device 1201 may communicate with the electronic device 1204 via the server 1208. The electronic device 1201 may include a processor 1220, a memory 1230, an input device 1250, a sound output device 1255, a display device 1260, an audio module 1270, a sensor module 1276, an interface 1277, a haptic module 1279, a camera module 1280, a power management module 1288, a battery 1289, a communication module 1290, a subscriber identification module (SIM) card 1296, and an antenna module 1297. In one embodiment, at least one (e.g., the display device 1260 or the camera module 1280) of the components may be omitted from the electronic device 1201, or one or more other components may be added to the electronic device 1201. Some of the components may be implemented as a single integrated circuit (IC). For example, the sensor module 1276 (e.g., a fingerprint sensor, an iris sensor, or an illuminance sensor) may be embedded in the display device 1260 (e.g., a display).

The processor 1220 may execute software (e.g., a program 1240) to control at least one other component (e.g., a hardware or a software component) of the electronic device 1201 coupled with the processor 1220 and may perform various data processing or computations.

As at least part of the data processing or computations, the processor 1220 may load a command or data received from another component (e.g., the sensor module 1276 or the communication module 1290) in volatile memory 1232, process the command or the data stored in the volatile memory 1232, and store resulting data in non-volatile memory 1234. The processor 1220 may include a main processor 1221 (e.g., a central processing unit (CPU) or an application processor (AP)), and an auxiliary processor 1223 (e.g., a graphics processing unit (GPU), an image signal processor (ISP), a sensor hub processor, or a communication processor (CP)) that is operable independently from, or in conjunction with, the main processor 1221. Additionally or alternatively, the auxiliary processor 1223 may be adapted to consume less power than the main processor 1221, or execute a particular function. The auxiliary processor 1223 may be implemented as being separate from, or a part of, the main processor 1221.

The auxiliary processor 1223 may control at least some of the functions or states related to at least one component (e.g., the display device 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). The auxiliary processor 1223 (e.g., an image signal processor or a communication processor) may be implemented as part of another component (e.g., the camera module 1280 or the communication module 1290) functionally related to the auxiliary processor 1223.

The memory 1230 may store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234. Non-volatile memory 1234 may include internal memory 1236 and/or external memory 1238.

The program 1240 may be stored in the memory 1230 as software, and may include, for example, an operating system (OS) 1242, middleware 1244, or an application 1246.

The input device 1250 may receive a command or data to be used by another component (e.g., the processor 1220) of the electronic device 1201, from the outside (e.g., a user) of the electronic device 1201. The input device 1250 may include, for example, a microphone, a mouse, or a keyboard.

The sound output device 1255 may output sound signals to the outside of the electronic device 1201. The sound output device 1255 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 1260 may visually provide information to the outside (e.g., a user) of the electronic device 1201. The display device 1260 may include, for example, a display, a hologram device, or a projector and control circuitry to control a corresponding one of the display, hologram device, and projector. The display device 1260 may include touch circuitry adapted to detect a touch, or sensor circuitry (e.g., a pressure sensor) adapted to measure the intensity of force incurred by the touch.

The audio module 1270 may convert a sound into an electrical signal and vice versa. The audio module 1270 may obtain the sound via the input device 1250 or output the sound via the sound output device 1255 or a headphone of an external electronic device 1202 directly (e.g., wired) or wirelessly coupled with the electronic device 1201.

The sensor module 1276 may detect an operational state (e.g., power or temperature) of the electronic device 1201 or an environmental state (e.g., a state of a user) external to the electronic device 1201, and then generate an electrical signal or data value corresponding to the detected state. The sensor module 1276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device 1202 directly (e.g., wired) or wirelessly. The interface 1277 may include, for example, a high- definition multimedia interface (HDMI), a universal serial bus (USB) interface, a secure digital (SD) card interface, or an audio interface.

A connecting terminal 1278 may include a connector via which the electronic device 1201 may be physically connected with the external electronic device 1202. The connecting terminal 1278 may include, for example, an HDMI connector, a USB connector, an SD card connector, or an audio connector (e.g., a headphone connector).

The haptic module 1279 may convert an electrical signal into a mechanical stimulus (e.g., a vibration or a movement) or an electrical stimulus which may be recognized by a user via tactile sensation or kinesthetic sensation. The haptic module 1279 may include, for example, a motor, a piezoelectric element, or an electrical stimulator.

The camera module 1280 may capture a still image or moving images. The camera module 1280 may include one or more lenses, image sensors, image signal processors, or flashes. The power management module 1288 may manage power supplied to the electronic device 1201. The power management module 1288 may be implemented as at least part of, for example, a power management integrated circuit (PMIC).

The battery 1289 may supply power to at least one component of the electronic device 1201. The battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the AP) and supports a direct (e.g., wired) communication or a wireless communication. The communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device via the first network 1298 (e.g., a short-range communication network, such as BLUETOOTH™, wireless-fidelity (Wi-Fi) direct, or a standard of the Infrared Data Association (IrDA)) or the second network 1299 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1292 may identify and authenticate the electronic device 1201 in a communication network, such as the first network 1298 or the second network 1299, using subscriber information (e.g., international mobile subscriber identity (IMSI)) stored in the subscriber identification module 1296.

The antenna module 1297 may transmit or receive a signal or power to or from the outside (e.g., the external electronic device) of the electronic device 1201. The antenna module 1297 may include one or more antennas, and, therefrom, at least one antenna appropriate for a communication scheme used in the communication network, such as the first network 1298 or the second network 1299, may be selected, for example, by the communication module 1290 (e.g., the wireless communication module 1292). The signal or the power may then be transmitted or received between the communication module 1290 and the external electronic device via the selected at least one antenna.

Commands or data may be transmitted or received between the electronic device 1201 and the external electronic device 1204 via the server 1208 coupled with the second network 1299. Each of the electronic devices 1202 and 1204 may be a device of a same type as, or a different type, from the electronic device 1201. All or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 1201. The electronic device 1201 may provide the outcome, with or without further processing of the outcome, as at least part of a reply to the request. To that end, a cloud computing, distributed computing, or client-server computing technology may be used, for example.

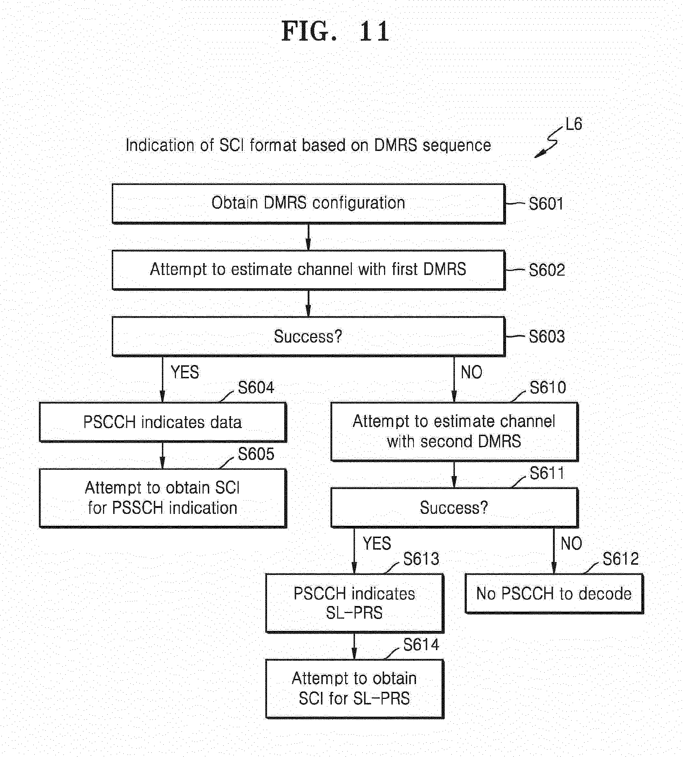

FIG. 1A shows a system including UE 1, UE 2 and UE 3 and a gNB. A UE may include a radio (see FIG. 12 item 1292) and a processing circuit (or a means for processing) (see FIG. 12 item 1220), which may perform various methods disclosed herein, e.g., the method illustrated in FIGS 3A, 3B, 3C, 6, 9, 10 and 11.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively, or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications within the sope of the following claims.

**Claims**

1. A method of resource allocation, the method comprising:

    performing (S101), by a first user equipment, UE, based on a first configuration, a sensing-based resource selection procedure to obtain a set of candidate single-slot sidelink, SL, positioning reference signal, SL-PRS, resources to be used for transmission, wherein a candidate single-slot SL-PRS resource is uniquely identified by a SL-PRS resource index within a set of SL-PRS resource ID(s) provided by a higher layer and a slot index;
    passing (S102) the set of candidate single-slot SL-PRS resources to the higher layer for selection;
    receiving (S103) an indication of selected single-slot SL-PRS resources from the higher layer;
    transmitting (S104), by the first UE, a SL-PRS signal using selected single-slot SL-PRS resources; and
    transmitting (S105), by the first UE, in a same slot including the SL-PRS signal, a PSCCH signal carrying a sidelink control information, SCI.

2. The method of claim 1, further comprising receiving, by the first UE, the first configuration comprising SL-PRS time information and a number of configured frequency resources allocated for SL-PRS transmission, wherein the number of configured frequency resources are allocated for a dedicated resource pool for SL-PRS transmission, and wherein each selected SL-PRS resource candidate occupies a full bandwidth of the dedicated resource pool in a frequency domain.

3. The method of claim 1 or 2, wherein more than one UE transmits in the same slot in a time-division multiplexing, TDM, manner with different SL-PRS resource IDs.

4. The method of any one of claims 1 to 3, wherein the SCI comprises a resource ID indication for the SL-PRS signal.

5. The method of any one of claims 1 to 4, wherein the performing the sensing is based on a reference signal received power, RSRP, threshold, wherein an RSRP is measured on the set of candidate single-slot SL-PRS resources.

6. The method of any one of claims 1 to 5, wherein the SL-PRS signal is associated with an L1 transmission priority.

7. The method of claim 6, wherein a value of L1 transmission priority is included in SCI carried by a physical sidelink control channel, PSCCH, associated with the SL-PRS signal.

8. The method of claim 5, wherein the RSRP threshold is associated with a first transmission priority in a received SCI and associated with a second transmission priority of selected SL-PRS resources.

9. The method of any one of claims 1 to 5, wherein the SL-PRS signal is associated with a remaining packet delay budget.

10. A user equipment, UE, (1201) configured to perform resource allocation, the UE (1201) comprising:

    a non-transitory memory (1230) storing instructions; and
    a processor (1220) configured to execute the instructions to perform the method according to any one of claims 1 to 9.

11. The UE (1201) of claim 10, wherein the UE (1201) is configured to decode both a first stage SCI and a second stage SCI to find the resource allocation for both the data signal and the SL-PRS signal when performing the sensing-based resource selection procedure.

12. The UE (1201) of claim 10 or 11, wherein the UE (1201) is configured to consider possible periods for data and a candidate SL-PRS signal when performing the sensing-based resource selection procedure to avoid collisions between the SL-PRS signal and a second SL-PRS signal of a neighboring UE (1202).

13. The UE (1201) of claim 11, wherein the second stage SCI includes a resource ID indication for the SL-PRS signal.

14. The UE (1201) of any one of claims 10 to 13, wherein the processor is further configured to execute the instructions to perform receiving, by the UE (1201), the first configuration,

    wherein the first configuration comprises a set of sidelink, SL, positioning reference signal, SL-PRS, time information and a number of configured frequency resources allocated for the transmission of both a data signal and a SL-PRS signal, and
    wherein the number of configured frequency resources are allocated for a shared resource pool.

**15.** The UE (1201) of claim 14, wherein the candidate single-slot SL-PRS resource is further identified by a subchannel index in a frequency domain.

**16.** The UE (1201) of claim 15, wherein an RSRP threshold is associated with an L1 transmission priority;

**17.** The UE (1201) of any one of claims 10 to 16, wherein the SL-PRS signal is associated with a number of sub-channels to be used in the slot.

**18.** A method by a user equipment, UE, of communicating data in a vehicle to everything, V2X, mode 2 system, the method comprising:

forming an allocation of resource elements within a slot, wherein a first assignment of a physical sidelink shared channel demodulation reference signal (PSSCH DMRS) to a first resource element has a priority over a second assignment of a sidelink, SL, positioning reference signal (SL-PRS) to the first resource element, such that a SL-PRS signal is transmitted in a second symbol separate from any symbol configured with PSSCH DMRS, and wherein the allocation of resource elements within the slot comprises an assignment of data to a second resource element;

modulating an orthogonal frequency division multiplex, OFDM, signal based on the allocation of resource elements; and

transmitting the OFDM signal.

**19.** A method of resource allocation, the method comprising:

receiving, by a first user equipment, UE, a first configuration parameter from a higher layer, the first configuration parameter comprising a first index indicating a comb size, a first comb offset, a first subcarrier offset and a first number of sidelink positioning reference signal, SL-PRS, symbols for a first SL-PRS transmission in a dedicated resource pool;

receiving, by a second UE, a second configuration parameter from the higher layer, the second configuration parameter comprising a second index, the second index indicating the comb size, a second comb offset, a second subcarrier offset and a second number of SL-PRS symbols for a second SL-PRS transmission in the dedicated resource pool;

transmitting, by the first UE, a first SL-PRS signal according to the first configuration parameter and transmitting by the second UE a second SL-PRS signal according to the first configuration parameter,

wherein the first SL-PRS signal and the second SL-PRS signal are allocated in two sets of non-overlapping symbols in a slot.

**20.** The method of claim 19, wherein the first configuration parameter and the second configuration parameter are associated with the dedicated resource pool, and the dedicated resource pool is not associated with data transmission.

# FIG. 1A

5G Core

In-network

gNB

Uu

UE 3

UE 2

Side link mode 2

UE 1

X

y

z

# FIG. 1B

# FIG. 2

Propagation of PRS from
UE 2

Positioning
Side link mode 2
Dedicated Resource
Pool (no data)

Propagation of PRS from
UE 1

v2

UE 2

v1

UE 1

Position of UE 1 at a time
t0:
{x1, y1, z1}

x
y
z

Example
roadway

# FIG. 3A

SL-PRS Resource Allocation                                    L1

Performing, by a first UE based on a first configuration,
a sensing-based resource selection procedure to obtain
a set of candidate single-slot SL-PRS resources to be used for
transmission. A candidate single-slot SL-PRS resource is          S101
uniquely identified by a SL PRS resource index within a set of
SL-PRS resource ID(s) provided by a higher layer and by a slot index

Passing the set of candidate single-slot
SL-PRS resources to the higher layer for selection                S102

Receiving an indication of selected single-slot
SL-PRS resources from the higher layer                            S103

Transmitting, by the first UE, a SL-PRS signal using
the selected single-slot SL-PRS resources                         S104

Transmitting, by the first UE, in a same slot including the SL-PRS signal,
a PSCCH signal carrying sidelink control information (SCI)         S105

# FIG. 3B

SL-PRS Resource Allocation from a Dedicated Resource Pool (no data) — L2

| | |
|---|---|
| Numerology, comb size, comb offsets are configured in UE 1 and UE 2 | S201 |
| Determine UE 2 reservation of SL-PRS by monitoring, during a sense window, a sidelink resource pool, and measuring RSRP of reservation message sent by UE 2 in SCI | S202 |
| Determine priority of UE1 and priority of UE2 | S203 |
| Select comb offset (position of diagonal in comb configuration) based on priorities | S204 |
| Transmit, by UE1, SL-PRS at selected comb offset | S205 |
| Determine, based on SL-PRS of UE 1, position of UE 1 | S206 |
| Inform UE 1 of the position of UE 1 | S207 |

# FIG. 3C

SL-PRS Resource Allocation from a Dedicated Resource Pool
(with data)
L11

Receiving at a UE 1 and a UE 2, a first configuration at a first time, the first configuration comprising a set of sidelink (SL) positioning reference signal (SL PRS) times and a number of configured frequency resources allocated for a dedicated resource pool for SL PRS transmission
S111

Performing a sensing-based resource selection procedure to obtain a set of candidate single-slot SL-PRS resources to be used for transmission. A candidate single-slot SL-PRS resource is uniquely identified by the SL PRS resource index within the set of SL-PRS resource ID(s) provided by the higher layer and the slot index
S112

Passing the set of candidate single-slot SL-PRS resources to the higher layer for selection
S113

Receiving selected single-slot SL-PRS resources from the higher layer
S114

Transmitting, by UE 1 at a second time after the first time, SL-PRS signals using the selected single-slot SL-PRS resources, the SL PRS transmission being associated with a PSCCH transmission carrying SCI in the same slot, and transmitting data in the same slot
S115

# FIG. 4

Dedicated Resource
Pool (no data)

physical
resource
block
(PRB)

subcarrier    symbol

▨  REs in first example SL-PRS index

■  REs in second example SL-PRS index

stagger

0    1    2    3    4    5    6    7    8    9    10    11    12    13

AGC                              slot                    Guard
                                                          Period

# FIG. 5

Data Communication
Side link mode 2
Shared Resource Pool

v2

UE 2

Propagation of PSSCH
from UE 1

v1

UE 1

Side link mode 2

# FIG. 6

SL-PRS Resource Allocation from a Shared Resource Pool (includes data), forming an allocation of resource elements to a PSSCH within a slot — L3

| Numerology for slot including PSSCH is configured in UE 1 and UE 2 | — S301 |

Populate time frequency grid of slot such that a first assignment of a demodulation reference signal (DMRS) to a first resource element has a priority over a second assignment of a sidelink (SL) positioning reference signal (SL-PRS) to the first resource element, such that the SL-PRS is not transmitted in a same symbol as the DMRS — S302

Assign data to a portion of other resource elements in the slot — S303

Modulate an OFDM signal based on the allocation of DMRS, SL-PRS and data — S304

Transmit the OFDM signal from UE 1 — S305

Receive, at UE 2, the OFDM signal from UE 1 — S306

Determine, at UE 2, the position of UE 1 based on the SLPRS from UE 1 and determine, at UE 2, and determine the data based on the DMRS from UE 1 — S307

FIG. 7

# FIG. 8

Example Shared Resource Pools

SL BWP

frequency

$M_{sub}$ PRBs

L subchannels

slot

Resource Pools

time

# FIG. 9

SL-PRS Hybrid Resource Pool　　　　　　$\swarrow$L4

| Obtain rules for SL-PRS transmission | —S401 |

$\downarrow$

| Select SL-PRS pattern | —S402 |

$\downarrow$

| Transmit SCI indicating PSSCH transmission and selected SCI pattern | —S403 |

$\downarrow$

| Multiplex and transmit PSCCH and SL-PRS | —S404 |

# FIG. 10

SL-PRS Hybrid Resource Pool　　L5

Numerology, comb size,
comb offsets are configured in UE 1 and UE 2 — S501

Determine a need to transmit SL-PRS — S502

Perform sensing of a slot in (detect SCI in a slot) — S503

Is a SL-PRS reservation detected? — S504

YES　　　　　　　　　　　　　　　　　NO

S505

Select the same slot as indicated
by the reservation for SL-PRS
transmission in a dedicated resource pool

S507

Select a slot for
SL-PRS transmission
in a shared resource pool

S506

Transmit SL-PRS in the slot of the
reservation at the selected comb offset

S508

Transmit SL-PRS in the selected
slot at the selected comb offset

# FIG. 11

Indication of SCI format based on DMRS sequence L6

```
┌─────────────────────────────────────────┐
│       Obtain DMRS configuration          │── S601
└─────────────────────────────────────────┘
                    │
                    ▼
┌─────────────────────────────────────────┐
│   Attempt to estimate channel with first DMRS  │── S602
└─────────────────────────────────────────┘
                    │
                    ▼
┌─────────────────────────────────────────┐
│                 Success?                 │── S603
└─────────────────────────────────────────┘
    │ YES                        │ NO
    │ S604                       │ S610
    ▼                            ▼
┌──────────────────┐    ┌──────────────────────┐
│ PSCCH indicates data │   │ Attempt to estimate channel │
└──────────────────┘    │    with second DMRS      │
    │ S605               └──────────────────────┘
    ▼                            │ S611
┌──────────────────┐             ▼
│ Attempt to obtain SCI │   ┌──────────────────────┐
│ for PSSCH indication │   │        Success?       │
└──────────────────┘    └──────────────────────┘
                          │ YES            │ NO
                          │ S613           │ S612
                          ▼                ▼
                  ┌──────────────┐  ┌──────────────────┐
                  │ PSCCH indicates │  │ No PSCCH to decode │
                  │    SL-PRS     │  └──────────────────┘
                  └──────────────┘
                          │ S614
                          ▼
                  ┌──────────────┐
                  │ Attempt to obtain │
                  │  SCI for SL-PRS  │
                  └──────────────┘
```

# FIG. 12

1200

1201

**ELECTRONIC DEVICE**

1220

**Processor**

1221

1223

Main Processor

Auxiliary Processor

1250

**Input Device**

1255

**Sound Output Device**

1260

**Display Device**

1270

**Audio Device**

1276

**Sensor Module**

1277

**Interface**

1279

**Haptic Module**

1280

**Camera Module**

1288

**Power Management Module**

1289

**Battery**

1296

**Subscriber Identification Module**

1297

**Antenna Module**

1230

**MEMORY**

1232

VOLATILE MEMORY

1234

NON-VOLATILE MEMORY

1236

Internal Memory

1238

External Memory

1290

**COMMUNICATION MODULE**

1292

WIRELESS COMMUNICATION MODULE

1294

WIRED COMMUNICATION MODULE

1278

**Connecting Terminal**

1240

**PROGRAM**

1242

Operating System

1244

Middleware

1246

Application

1299

NETWORK

1298

1204

**ELECTRONIC DEVICE**

1208

**SERVER**

1202

**ELECTRONIC DEVICE**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Overall description of Radio Access Network (RAN) aspects for Vehicle-to-everything (V2X) based on LTE and NR. *ETSI TR 137.985 V16.0.0,* July 2020